# EUROPÄISCHE PATENTSCHRIFT

(11) **EP 1 718 476 B1**
(45) Veröffentlichungstag und Bekanntmachung des Hinweises auf die Patenterteilung: **09.07.2008**
(21) Anmeldenummer: 05715251.4
(22) Anmeldetag: 04.02.2005
(51) Int. Cl.: B42D 15/10

(54) **VERFAHREN ZUR HERSTELLUNG EINES BUCHARTIGEN WERTDOKUMENTES SOWIE EIN BUCHARTIGES WERTDOKUMENT**
METHOD FOR THE PRODUCTION OF A BOOK-TYPE SECURITY DOCUMENT AND A BOOK-TYPE SECURITY DOCUMENT
PROC D POUR R ALISER UN DOCUMENT DE VALEUR DE TYPE LIVRE ET DOCUMENT DE VALEUR DE TYPE LIVRE

(30) Priorität: 20.02.2004 DE 102004008840
(43) Veröffentlichungstag der Anmeldung: 08.11.2006
(73) Patentinhaber: Bundesdruckerei GmbH, 10958 Berlin (DE)
(72) Erfinder: HOEPPNER, Harald, 12309 Berlin (DE); RADTKE, Michael, 12489 Berlin (DE); MÄRTENS, Detlef, 13599 Berlin (DE); PAESCHKE, Manfred, 16352 Basdorf (DE); EHREKE, Jens, 10317 Berlin (DE); LÖER, Thomas, 10961 Berlin (DE); SEIDEL, Rainer, 13467 Berlin (DE); KNEBEL, Michael, 10405 Berlin (DE)
(74) Vertreter: Maser, Jochen
(86) Internationale Anmeldenummer: PCT/EP2005/001110
(87) Internationale Veröffentlichungsnummer: WO 2005/090091

(56) Entgegenhaltungen:
- EP-A- 0 364 730
- EP-A- 1 008 459
- US-A- 2 588 067
- US-A- 3 566 521
- US-A- 3 601 913
- US-A- 4 545 838
- US-A- 6 135 503

## Beschreibung

Die Erfindung betrifft ein Verfahren zur Herstellung eines buchartigen Wertdokumentes sowie ein buchartiges Wertdokument, insbesondere ein Passbuch.

Ein buchartiges Wertdokument, wie beispielsweise ein Reisepass oder dergleichen, besteht aus einem Buchblock und einer Passkarte, welche miteinander verbunden werden, bevor diese mit einem Bucheinband zu einem Passbuch verbunden werden. Der Buchblock ist aus einem Papier oder papierähnlichem Material hergestellt, welches Sicherheitsmerkmale umfasst. Die Passkarte weist eine Vielzahl von Sicherheitselementen auf, und im Falle eines Reisepasses wird der Buchblock passend zur Passkarte personalisiert.

Es besteht ein erhebliches Interesse daran, buchartige Wertdokumente vor Fälschungen zu schützen und die Herstellung von Fälschungen technisch unmöglich oder zumindest unrentabel zu maschen, Darüber hinaus soll eine leichte Überprüfbarkeit und Kontrollierbarkeit von Zwischenprodukten für buchartige Wertdokumente oder für Wertdokumente selbst ermöglicht sein.

Aus der EP 0 784 829 B1 ist eine Trägeranordnung zum Einbau in eine kontaktlose Chipkarte bekannt. Diese Trägeranordnung umfasst eine Transpondereinheit, die beispielsweise mit einem Halbleiterchip und mit einer damit verbundenen Antennenspule ausgebildet ist. Diese Transpondereinheiten eignen sich zum kontaktlosen Betrieb von Chipkarten. Die für den Betrieb nötige Energie wird in allgemeiner Form mittels elektromagnetischer Wellen von einem Terminal zur Chipkarte übertragen. Auch der Datenverkehr zwischen dem Terminal und der Chipkarte erfolgt auf diesem Weg. Dadurch können Merkmalen in der Transpondereinheit abgespeichert werden.

Diese Trägeranordnung stellt ein sogenanntes Prelaminat dar, welches zur Weiterverarbeitung in einer Chipkarte geeignet ist.

Aus der DE 197 11 343 A1 ist eine Plastikkarte mit individueller optischer Information bekannt, bei der zur Personalisierung eine fotografische Schicht aufgebracht ist. Diese fotografische Schicht wird auf einen Träger aufgebracht, welcher einseitig durch eine Laminatschicht überlaminiert ist, wobei Kontakte des Kartenchips von der Überdeckung des Laminats ausgespart sind.

Aus der EP 1 006 459 A geht ein buchartiges Wertdokument mit zumindest einem Sicherheitsinlett und zumindest einer Transporteinheit hervor, Dieses Sicherheitsinlett weist beidseitig eine Laminatschicht auf, wobei deren Ränder nicht miteinander verbunden sind. Die Laminatschichten sind relativ steif ausgebildet und weisen eine hohe Dicke auf, so dass eine spezielle Verbindung vom Überstand zum laminierten Sicherheitsinlett erforderlich ist. Durch die nicht geschlossenen Ränder besteht eine erhöhte Manipulationsgefahr, indem die Laminatschichten aufgetrennt und das Sicherheitsinlett ausgetauscht werden kann.

Aus der US 3,601,913 A geht eine Scheckkarte oder Chipkarte hervor, welche einen dicken Aufbau mit einer hohen Steifigkeit aufweist. Bei dieser Chipkarte sind zwei einander gegenüberliegende Längskanten durch Laminatschichten miteinander verschweißt. Die vordere und hintere Stirnkante der Chipkarte ist jedoch nicht verschweißt, so dass dadurch Manipulationsmöglichkeiten gegeben sind.

Aus der US 3,566,521 A geht eine Identifkationskarte beziehungsweise eine Zugangsberechtigung hervor, bei der ausschließlich eine Personalisierungsdatenseite durch ein thermoplastisches Material umschlossen und zu einer laminaren Einheit gepresst ist, Durch diese Umhüllung wird ein mechanischer Schutz der Personalisierungsdatenseite gegeben. Solche Identifikationskarten sind jedoch gegen Fälschungen nicht gesichert, da in einfacher Weise eine vollständige Neuerstellung solcher Scheckkarten ermöglicht ist.

Der Erfindung liegt die Aufgabe zugrunde, ein kostengünstiges und fälschungssicheres Verfahren zur Herstellung von Wertdokumenten zu schaffen sowie ein Wertdokument bereitzustellen, welches eine kontaktlose Speicherung für Sicherheitsmerkmale des Wertdokumente, Daten des Wertdokumentes und Personendaten des Inhabers des Wertdokumentes, beispielsweise biometrische Merkmale, ermöglicht.

Diese Aufgabe wird erfindungsgemäß durch ein Verfahren gemäß den Merkmalen des Anspruchs 1 sowie durch ein Wertdokument gemäß den Merkmalen des Anspruchs 21 gelöst.

Das erfindungsgemäße Verfahren zur Herstellung eines Wertdokumentes mit zumindest einem Sicherheitsinlett und zumindest einer Transpondereinheit, bei dem das zumindest eine Sicherheitsinlett und die zumindest eine Transpondereinheit durch Laminatschichten vollständig umschlossen werden, so dass eine Laminatschichtumhüllung gebildet wird und bei dem zumindest eine Transpondereinheit nach dem Herstellen der Laminatschichtumhüllung personalisiert wird, weist den Vorteil auf, dass durch die Laminatschichtumhüllung die Zugänglichkeit zum Sicherheitsinlett zumindest erschwert wird und dadurch ein Austausch des Sicherheitsinletts einen hohen Manipulationsaufwand erfordert. Zusätzlich sind solche Manipulationen schnell ersichtlich. Darüber hinaus kann durch das nachträgliche Einbringen der Personalisierungsdaten beziehungsweise der Personalisierung ermöglicht werden, dass bis zum Einbringen der Personalisierungsdaten die Echtheit des bisherigen hergestellten Sicherheitsinlettes geprüft und im Anschluss daran die auf der Personalisierungsdatenseite enthaltenen Personalisierungsdaten in der zumindest einen Transpondereinhelt abgespeichert werden. Zusätzlich kann eine Erhöhung der Sicherheitsmerkmale geschaffen werden, indem die Personalisierungsdaten der Personalisierungsdatenseite unabhängig von dem Herstellungsprozess der Sicherheitsinletts nachträglich gespeichert werden.

Nach einer vorteilhaften Ausgestaltung der Erfindung ist vorgesehen, dass der Rand der Laminatschichten nach dem vollständigen Umschließen des zumindest einen Sicherheitsinletts und der zumindest einen Transpondereinheit auf ein Endformat gestanzt, geschnitten oder durch andere Trennverfahren konfektioniert wird. Dadurch kann eine einheitliche Größe für eine Buchseite geschaffen werden, die mit weiteren Innenseiten, welche ohne Laminatschichten ausgebildet sind, übereinstimmen.

Das zumindest eine Sicherheitsinlett und die zumindest eine Transpondereinheit beziehungsweise deren Funktionen sind gemäß einer vorteilhaften Ausführungsform der Erfindung in einer Schicht integriert. Dadurch kann ein Wertdokument hergestellt werden, welches einen sehr dünnen Aufbau umfasst. Durch die kompakte und zumindest teilweise Integration können weitere Sicherheitsmerkmale ausgebildet sein, wodurch die Manipulation erschwert wird.

Nach einer weiteren vorteilhaften Ausgestaltung der Erfindung ist vorgesehen, dass auf das zumindest eine Sicherheitsinlett zumindest eine Transpondereinheit aufgebracht und dieser Verbund mit Laminatschichten versehen wird. Dadurch ist ermöglicht, dass bei einer als Sicherheitsinlett ausgebildeten Personalisierseite auf einer Vorder- oder Rückseite eine Transpondereinheit vorgesehen ist, welche zusammen mit der Personalisierseite einlaminiert wird. Durch diese Einheit, bei der die Transpondereinheit insbesondere Personalisierdaten der Personalisierseite umfasst, wird eine besonders schwer zu fälschende Einheit geschaffen.

Alternativ kann auch vorgesehen sein, dass eine Transpondereinheit auf eine Innenseite eines buchartigen Wertdokumentes, wie beispielsweise einem Passbuch, aufgebracht wird, und diese Innenseite und Transpondereinheit von den Laminatschichten vollständig umgeben und umhüllt werden. Diese Innenseiten weisen vorteilhafterweise zumindest ein Sicherheitsmerkmal auf, welches ebenfalls in der Transpondereinheit abgespeichert werden kann.

Die beiden vorgenannten Ausführungsformen stellen sicher, dass ein Delaminieren oder ein Spalten des Sicherheitsinletts und/oder der Transpondereinheit unmöglich gemacht wird.

Nach einer weiteren vorteilhaften Ausgestaltung der Erfindung ist vorgesehen, dass an den Laminatschichten an einer Seite ein Überstand erzeugt wird und der einlaminierte Verbund im Bereich des Überstandes in einen Buchblock eingenäht wird. Dadurch können das in eine Umhüllung aus Laminatschichten vorgesehene zumindest eine Sicherheitsinlett und die zumindest eine Transpondereinheit beim Herstellen des buchartigen Wertdokumentes eingebracht werden. Dadurch wird die Manipulation des Weiteren erschwert.

Nach einer weiteren alternativen Ausgestaltung der Erfindung ist vorgesehen, dass durch die Laminatschichten eine Doppelseite für ein buchartiges Wertdokument gebildet wird und auf einer Seite zumindest ein Sicherheitsinlett eingebracht wird und auf der anderen Seite zumindest eine Transpondereinheit umhüllt wird. Diese vorteilhafte Ausgestaltung weist den Vorteil auf, dass im Falzbereich der Doppelseite ein Steg oder ein Nahtbereich gebildet wird, über den die Doppelseite beim Herstellen des Wertdokumentes in den Buchblock eingenäht oder befestigt wird. Diese Ausgestaltung weist den Vorteil auf, dass eine geringe Dicke der Laminierschichtumhüllung geschaffen wird, wobei sowohl das zumindest eine Sicherheitsinlett als auch die zumindest eine Transpondereinheit in einer Schutzumhüllung durch die Laminatschichten vorgesehen sind.

Alternativ kann vorgesehen sein, dass die Doppelseite getrennt ausgebildet ist und an jeweils einer Seite der getrennt ausgebildeten Doppelseite ein Überstand vorgesehen ist, welcher zum Einnähen in einen Buchblock oder zur Einarbeitung in ein buchartiges Wertdokument vorgesehen sind.

Die Laminatschichten werden vorteilhafterweise unter Druck und/oder Temperatur miteinander verklebt und verschweißt. Dadurch kann gleichzeitig bei der Verwendung von Klebemittel oder dergleichen zwischen dem zumindest einen Sicherheitsinlett und der zumindest einen Transpondereinheit eine Fixierung zueinander gegeben sein. Während oder vor dem Auflaminieren der Laminatschichten kann vorteilhafterweise auch eine Vergussmasse zur Fixierung eines IC-Moduls oder Chipmoduls eingebracht werden, so dass das Modul in der Vergussmasse fixiert und geschützt ist. Dies gilt insbesondere für den Laminiervorgang. Eine weitere vorteilhafte Ausführungsform kann durch die Verwendung eines beidseitigen Klebetapes erfolgen, welches beispielsweise mit Reaktivklebem beschichtet werden kann.

Nach einer weiteren vorteilhaften Ausgestaltung der Erfindung ist vorgesehen, dass mit einem Algorithmus ein Hash-Wert auf der Basis der I-CAO-Zeile und/oder der Personalisierdaten auf dem IC-Modul hinterlegt wird. Dadurch kann die korrekte Zusammengehörigkeit der einzelnen Sicherheitsmerkmale und -komponenten zu einem späteren Zeitpunkt überprüft und eine Fälschung sicher ermittelt werden. Gleichfalls soll vorteilhafterweise ein im IC-Modul vorhandener und unlöschbarer numerischer oder alphanumerischer und eineindeutiger Wert, der sich beispielsweise im sogenannten Write-Once-Speicher und/oder im ROM-Speicher und/oder andere beschriebene Speicher befindet, visuell wahrnehmbar auf dem Sicherheitsinlett, insbesondere der Personalisierseite, hinterlegt sein.

Nach einer weiteren vorteilhaften Ausgestaltung der Erfindung ist vorgesehen, dass nach der Herstellung einer Laminatschichtumhüllung, welche zumindest ein Sicherheitsinlett und zumindest eine Transpondereinheit umgibt, zumindest ein Sicherheitsmerkmal, Insbesondere eine Laserung oder Lochrasterung, in die Laminatschichtumhüllung eingebracht wird. Durch das weitere Einbringen von Sicherheitsmerkmalen während der Herstellung des Wertdokumentes kann die Fälschungssicherheit erhöht werden.

Die Transpondereinheit weist nach einer vorteilhaften Ausgestaltung der Erfindung zur Herstellung eines Wertdokumentes ein Chipmodul mit einer integrierten Antenne auf, welches mittels eines Tape-Automatic-Bonding-Prozesses (TAB) auf ein Sicherheitsinlett oder eine Laminatschicht aufgebracht wird. Dadurch kann eine kostengünstig Herstellung gegeben sein. Der Vorteil dieser Transpondereinheit liegt auch in deren Robustheit und einfacheren Prüfbarkeit.

Nach einer weiteren vorteilhaften Ausgestaltung der Erfindung ist vorgesehen, dass die Transpondereinheit ein Chipmodul umfasst, bei dem IC's auf sogenannten Interposer- beziehungsweise Kontaktelementen befestigt werden, wobei zwei Kontaktelemente dann mit Kontaktenden der Antennenspule elektrisch leitend verbunden werden. Dadurch kann eine weitere einfache Herstellung einer Transpondereinheit mit einer kontaktlosen Speicherung für biometrische Daten und weitere Sicherheitsmerkmale gegeben sein.

Eine weitere vorteilhafte Ausgestaltung der Transpondereinheit sieht vor, dass ein ungehaustes IC-Modul unter Verwendung einer Flip-Chip-Kontaktierung mit einer in der Laminatschicht vorgesehenen Antenne kontaktiert wird. Diese Ausgestaltung weist den Vorteil einer flach bauenden Transpondereinheit auf.

Nach einer weiteren vorteilhaften und alternativen Ausgestaltung der Erfindung ist vorgesehen, dass eine Transpondereinheit ein Chipmodul mit einer Kontaktierung für eine externe Spule oder Antenne umfasst, wobei die Spule oder Antenne mittels Siebdruck, mittels leitfähigen und polymeren, wie beispielsweise silbergefüllten Pasten, durch dünne Kupfer- oder Aluminium- oder Golddrähte, durch Ultraschall mittels Sonotroden-Technik, durch geätzte Spulen auf Basis von Kupfer, Aluminium oder weiteren leitfähigen Materialien, durch Inkjet-Technik mit einer entsprechend leitfähigen Tinte hergestellt wird. In Abhängigkeit der Anzahl der herzustellenden Transpondereinheiten kann die eine oder andere Ausgestaltung zur kostengünstigen Herstellung des Wertdokumentes führen.

Vorteilhafterweise wird das IC-Modul mittels einer Vergussmasse befestigt und geschützt. Durch diese Einbringung wird der Vorteil erzielt, dass das IC-Modul gegen Umwelteinflüsse, insbesondere gegen mechanischen Druck, geschützt ist. Des Weiteren kann eine Fixierung in einer gewünschten Lage zum Sicherheitsinlett vorgesehen sein. Beispielsweise kann nahe einem Passfoto ein Chip-Modul positioniert werden oder am Rand einer Personalisierseite oder Innenseite um einen maximalen Bereich für die Antennenspulen zur Verfügung zu stellen.

Die Laminierschichtumhüllung weist vorteilhafterweise zumindest eine transparente Laminatschicht auf, die beim Laminieren eingesetzt wird, so dass ein Sicherheitsinlett sichtbar und maschinenlesbar aufgenommen wird.

Das erfindungsgemäße buchartige Wertdokument, insbesondere Reisedokument, nach einem der vorhergehenden Ansprüche in einer die zumindest eine Transpondereinheit und das zumindest eine Sicherheitsinlett umgebenden Laminatschichtumhüllung, weist den Vorteil auf, dass das zumindest eine Sicherheitsinlett und die zumindest eine Transpondereinheit vollständig durch zumindest eine Laminatschicht umgeben und dadurch geschützt sind. Die Laminatschicht kann als Umhüllung oder als Tasche ausgebildet sein, in welcher das zumindest eine Sicherheitsinlett, beispielsweise in Form einer Personalisierseite oder einer mit Sicherheitsmerkmalen versehenen Innenseite sowie zumindest eine Transpondereinheit, angeordnet und umgeben sind. Durch die vorzugsweise zumindest teilweise Übereinstimmung der Sicherheitsmerkmale auf dem zumindest einen Sicherheitsinlett und der zumindest einen Transpondereinheit wird die Fälschungssicherheit wesentlich erhöht. Zudem führt ein Auftrennen der Laminatschicht um die zumindest eine Transpondereinheit und/oder um das zumindest eine Sicherheitsinlett auszutauschen zur Zerstörung des gesamten Verbundes. Durch diese erfindungsgemäße Anordnung kann beispielsweise eine Personalisierseite mit den visuell, fotografisch, drucktechnisch und/oder lasertechnisch eingebrachten Merkmalen dupliziert und in der zumindest einen Transpondereinheit kontaktlos im Speicher abgelegt werden. Durch diese Redundanz der Sicherheitsmerkmale ist die Manipulation erheblich erschwert.

Nach einer weiteren vorteilhaften Ausgestaltung des Wertdokumentes ist vorgesehen, dass das zumindest eine Sicherheitsinlett und die zumindest eine Transpondereinheit jeweils kleiner als ein Endformat einer Seite eines Buchblockes ausgebildet ist. Dadurch wird ermöglicht, dass die Laminatschichten einen äußeren umlaufenden Randbereich ausbilden, der ausschließlich aus der zumindest einen oberen und unteren Laminatschicht besteht, welche vorteilhafterweise miteinander zu einer Einheit im Randbereich verschweißt sind und nicht einzeln aufzutrennen sind.

Nach einer weiteren vorteilhaften Ausgestaltung des Wertdokumentes ist vorgesehen, dass die zumindest eine Laminatschicht als Deckfolie oder als Overlayfolie ausgebildet ist. In Abhängigkeit der Anwendungs- und Einsatzfälle kann sowohl zumindest eine Deckschicht als auch zumindest eine Overlayschicht aufgebracht werden. Beispielsweise kann zur Herstellung einer gleichmäßigen Schichtdicke der Laminatschichtumhüllung abschnittsweise ein Deck- und/oder Overlayschicht aufgebracht werden, so dass ungleiche Dicken durch das Chipmodul ausgeglichen und der fertiggestellte Verbund eine gleichmäßige Gesamtdicke umfasst.

Weitere vorteilhafte Ausgestaltungen und Weiterbildungen der Erfindung sind in den weiteren Ansprüchen angegeben.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht eines erfindungsgemäßen Wertdokumentes im aufgeklappten Zustand,
- Figur 2: eine schematische Draufsicht auf ein Sicherheitsinlett mit einer Transpondereinheit in einer Laminatschichtumhüllung,
- Figur 3: eine schematische Schnittdarstellung entlang der Linie II-II in Figur 2,
- Figur 4: eine schematische Draufsicht in Detailsicht auf ein Sicherheitsinlett mit Transpondereinheit in einer Laminatschichtumhüllung,
- Figur 5a: eine schematische Schnittdarstellung (Teilschnitt) eines laminierten Verbundes entlang der Linie IV-IV in Figur 4,
- Figur 5b: eine schematische Schnittdarstellung (Teilschnitt) einer alternativen Ausführungsform zu Figur 5a,
- Figur 6: eine schematische Schnittdarstellung (Teilschnitt) einer alternativen Ausführungsform zu Figur 5,
- Figur 7: eine schematische Draufsicht auf einen laminierten Verbund mit einer alternativen Anordnung einer Transpondereinheit,
- Figur 8: eine schematische Draufsicht auf einen laminierten Verbund mit einer weiteren alternativen Anordnung einer Transpondereinheit,
- Figur 9: eine schematische Darstellung eines Sicherheitsinletts und einer Transpondereinheit mit einer Laminatschichtumhüllung als Doppelseite,
- Figur 10: eine schematische Seitenansicht der Ausführungsform gemäß Figur 9 im aufgeklappten Zustand,
- Figur 11: eine schematische Seitenansicht einer weiteren alternativen Ausführungsform des buchartigen Wertdokumentes im aufgeklappten Zustand,
- Figur 12: eine schematische Seitenansicht einer weiteren alternativen Ausführungsform eines buchartigen Wertdokumentes im aufgeklappten Zustand und
- Figur 13: eine schematische Seitenansicht einer weiteren alternativen Ausführungsform eines buchartigen Wertdokumentes im aufgeklappten Zustand.

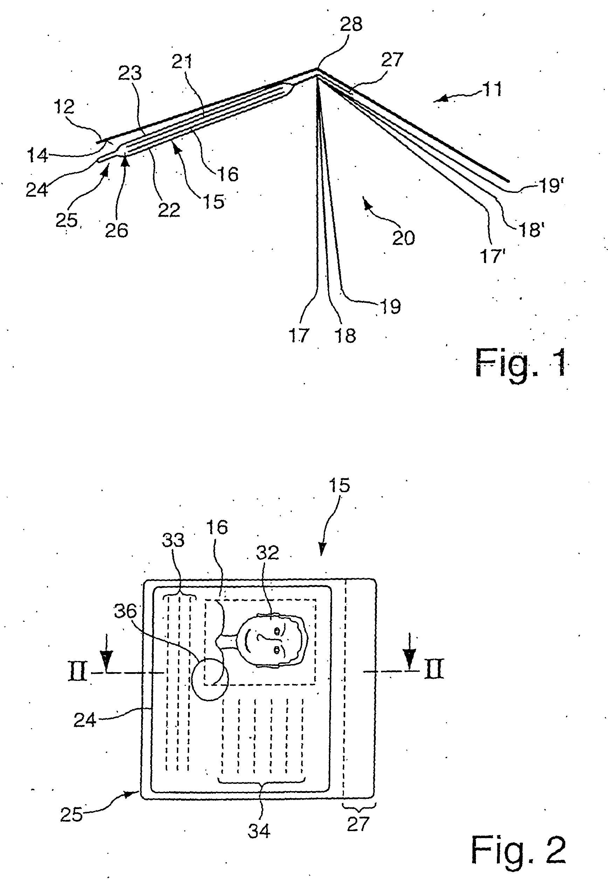

In Figur 1 wird ein Wertdokument 11 schematisch in aufgeklappter Ansicht gezeigt. Bei diesem Wertdokument 11 handelt es sich bevorzugt um ein Reisedokument oder ein Passbuch. Dieses Wertdokument 11 umfasst einen Bucheinband 12, wie beispielsweise einen Buchdeckel eines Buches auf der Außenseite als verstärkendes Element. Auf der Innenseite ist ein Vorsatz 14 vorgesehen. Dieser Vorsatz 14 umgibt den Bucheinband, der einen Buchdeckel umschließt. Das Wertdokument 11 umfasst zumindest ein Sicherheitsinlett 15 in Form von zumindest einer Personalisierseite 16. Vorteilhafterweise ist zumindest ein weiteres Sicherheitsinlett als Innenseiten 17, 18 und 19 vorgesehen. Die Innenseiten 17, 18 und 19 sind beispielsweise als Doppelseiten 17', 18', 19' ausgebildet und werden beim Herstellen des Wertdokumentes 11 im Falzbereich mit der Personalisierseite zu einem Buchblock 20 miteinander vernäht.

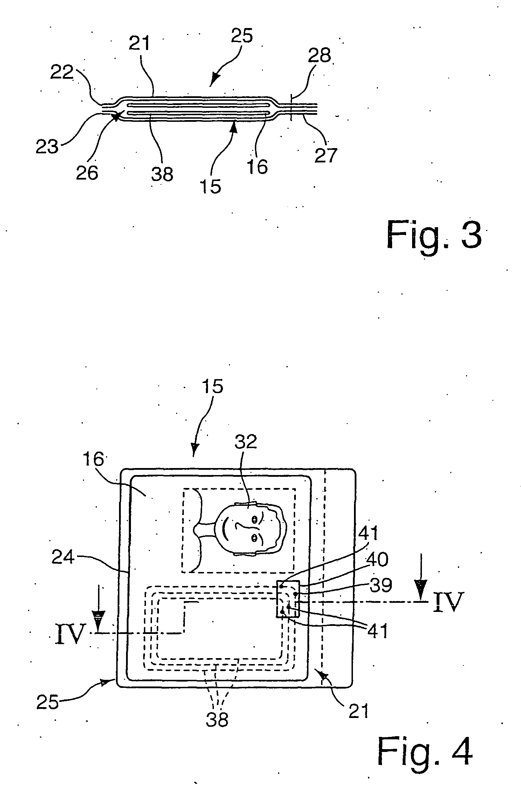

Das Sicherheitsinlett 15 weist beispielsweise auf einer Rückseite eine Transpondereinheit 21 auf, wobei das Sicherheitsinlett 15 und die Transpondereinheit 21 jeweils mit einer oberen und einer unteren Laminatschicht 22, 23 umgeben sind. Diese Laminatschichten 22, 23 umschließen das Sicherheitsinlett 15 und die Transpondereinheit 21 vollständig und weisen einen umlaufenen und geschlossenen Rand 24 auf, wie beispielsweise auch in den Figuren 2 und 3 näher dargestellt ist. Die Laminatschichten 22, 23 bilden eine Tasche oder eine Umhüllung 25 um einen Verbund 26, der zumindest aus einem Sicherheitsinlett 15, das aus mehreren Schichten bestehen kann, und zumindest einer Transpondereinheit 21 besteht. An einer Seite der Laminatschichtumhüllung 25 ist ein Überstand 27 ausgebildet, der beispielsweise 10 bis 13 mm beträgt. Dieser Überstand 27 trägt wesentlich zur Stabilität und zur Befestigung einer Naht 28 bei, durch welche auch die Innenseiten 17, 18, 19 zu einem Buchblock 20 zusammen mit der Laminatschichtumhüllung 25 fixiert werden. Alternativ kann auch vorgesehen sein, dass das Sicherheitsinlett 15 und die Transpondereinheit 21 in einer Schicht integriert sind oder durch die Kombination von mehreren Schichten und/oder Teilschichten aufgebaut und gebildet werden. Die nachfolgenden Ausführungsformen gelten für die vorgenannten Kombinationsmöglichkeiten, sofern diese geeignet sind.

In Figur 2 ist schematisch eine Draufsicht auf eine Personalisierseite 16 dargestellt, welche von Laminatschichten 22, 23 vollständig umschlossen ist. Die Personalisiervorderseite kann beispielsweise gemäß ICAO-Standard ausgebildet und umfasst ein Foto 32 des Dokumenteninhabers, eine OCR-maschinenlesbare ICAO-Zeile 33, Personalisierdaten 34 und vollflächig oder, wie im Ausführungsbeispiel elementweise, eine diffraktive Struktur 36, die oberflächig oder innenliegend ausgeführt sein kann, sowie eine Reihe weiterer nicht gezeichneter Sicherheitsmerkmale oder Elemente. Schematisch ist die Kontur der Personalisierseite 16 dargestellt, welche bevorzugt aus Sicherheitspapier und weiteren Sicherheitsmerkmalen hergestellt ist. Diese Kontur ist derart bemessen, dass ein Rand 24 von wenigen Millimetern die Personalisierseite und auch die zumindest eine Transpondereinheit 21 umgibt und die Laminatschichtumhüllung 25 gegenüber einem Bucheinband 12 nicht hervorsteht.

In Figur 3 ist eine schematische Schnittdarstellung entlang der Linie II-II in Figur 2 eines laminierten Verbundes 26 dargestellt. Die Personalisierseite 16 entspricht vorteilhafterweise in der Größe der Transpondereinheit 21. Grundsätzlich kann die Transpondereinheit 21 nahezu beliebige Formen und Positionen annehmen. Eine Antenne 38 beziehungsweise Spule der Transpondereinheit 21 muss allerdings eine Geometrie beziehungsweise eine Fläche oder eine Anzahl an Windungen aufweisen, damit eine entsprechende Güte für den gewünschten oder geforderten Leseabstand gegeben ist. Die Betriebsfrequenz ist beispielsweise 13,56 mHz und erlaubt übliche Leseleistungen. Die dargestellte Ausführungsform weist den Vorteil auf, dass insbesondere im Bereich des Buchrückens beziehungsweise der Naht 28 eine relativ geringe Dicke der Laminatschichtumhüllung 25 erreicht wird, so dass der Nähvorgang entsprechend einfach erfolgen kann und bei geeigneter Wahl der Laminatschichten 22, 23 die Anforderungen an die Biegehäufigkeit und Beständigkeit sowie an die Faltbarkeit erfüllt werden.

Die Laminatschichten 22, 23 können aus einer einzelnen Laminatschicht auf jeder Seite oder aus mehrschichtigen Folien bestehen, wie beispielsweise aus einer Kombination aus PE- und PET- beziehungsweise PET-ähnlichen Materialien mit hoher Oberflächenbeständigkeit ausgebildet sein. Des Weiteren können weitere thermoplastische Kunststofffolien oder sandwichartige Folienkombinationen, wie beispielsweise aus PVC, ABS, PET-G, PET, PP, PA, Teslin, PC oder dergleichen, eingesetzt werden.

In Figur 4 ist eine schematische Draufsicht auf einen laminierten Verbund 26 einer Laminatschichtumhüllung 25 im Teilschnitt dargestellt. Bei diesem Teilschnitt ist die Anordnung einer Transpondereinheit 21 zu einer Personalisierseite dargestellt. Die Transpondereinheit 21 umfasst zumindest eine Antenne 38 und ein Chipmodul 39, die über elektrische Verbindungen 41 zueinander vorzugsweise auf einem Interposer 40 kontaktiert sind. Die Transpondereinheit 21 ist beispielsweise neben dem Personalisierfoto 31 angeordnet. Die Lage der Antenne 38 kann beliebig und wahlweise auch im gesamten Bereich des Sicherheitsinletts 15 vorgesehen sein.

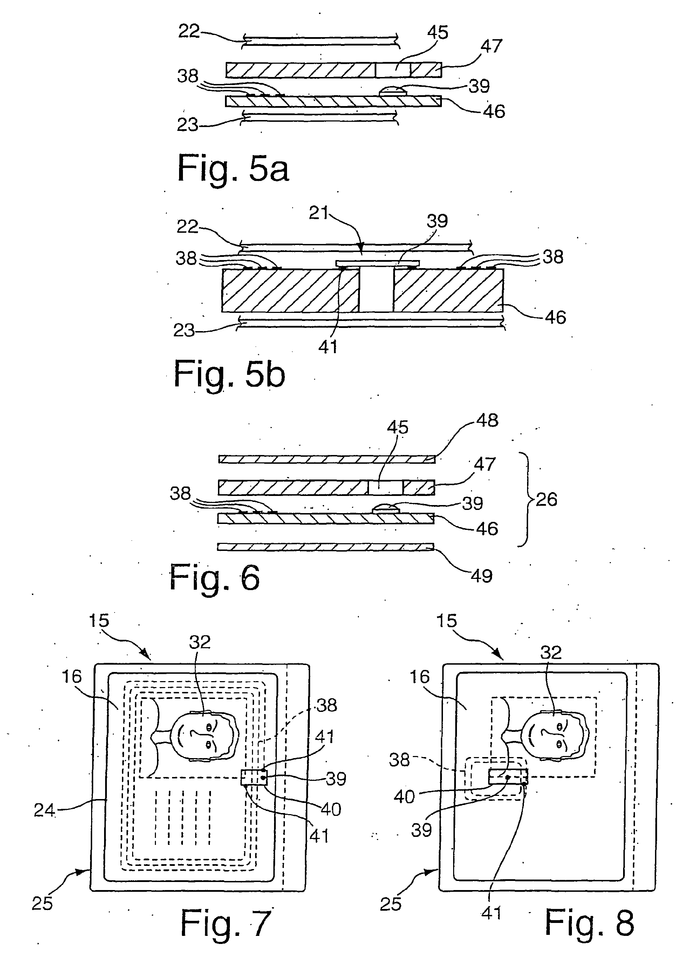

In Figur 5a ist eine schematische Schnittdarstellung des laminierten Verbundes 26 gemäß Figur 4 dargestellt. Auf einer Antennenträgerfolie 46 ist ein Chipmodul 39 aufgebracht, so dass ein elektrischer Kontakt zwischen dem Chipmodul 39 und der Antenne 38 bzw. deren Anschlüsse gegeben ist. Optional kann auf die Antennenträgerfolie 46 eine Deckfolie 47 aufgebracht oder auflaminiert werden, wobei bevorzugt die Deckfolie eine Aussparung 45 im Bereich des Chipmoduls 39 aufweist, so dass das Chipmodul 39 eingeebnet wird und gleichzeitig die Anschlüsse der Antenne 38 mechanisch geschützt werden. Die Chipmodule 39 liegen in der Dicke in einem Bereich zwischen 150 bis 250 µm, insbesondere im Bereich zwischen 180 bis 200 µm, und können grundsätzlich gedünnt werden. Die üblichen Antennensubstrate für Antennenträgerfolien 46 weisen eine Dicke von 6 bis 500 µm Dicke auf, insbesondere eine Dicke im Bereich zwischen 30 und 120 µm, und können je nach Herstellungsverfahren und geforderten Kontaktierverfahren des Chipmoduls 39 aus PET, PI, FR-4, Aramid, PVC, PS, PE, PA, PP, PE, Teslin, PC und dergleichen Materialien bestehen. Die Antennenspulen 38 können aus lackiertem Kupferdraht mit beispielsweise einer Ultraschall-Sonotroden-Verlegetechnik hergestellt werden. Alternativ können die Antennenspulen 38 als Luftspule in eine entsprechende Aussparung eingelegt und laminiert werden. Des Weiteren können die Antennenspulen 38 siebdrucktechnisch mittels polymeren und leitfähigen Pasten hergestellt werden (additive flexible Leiterplattentechnik) oder als flexible Leiterplatten mit subtraktiver Technik, als Ätztechnik in Kupfer oder Aluminium.

In Figur 5b ist eine schematische Schnittdarstellung einer alternativen Ausführungsform zu Figur 5a dargestellt. Eine vorzugsweise transparente Folie aus beispielsweise PE oder gleichwertigem Material, wie beispielsweise PET-G oder PMMA, ist als Antennenträgerfolie 46 ausgebildet oder nimmt zumindest die Antenne 38 auf. In einer Durchgangsbohrung oder Ausstanzung der vorzugsweise 100 bis 500 µm dicken Schicht ist ein Chipmodul 39 vorgesehen, welches über Kontakte 41 an einer Oberseite der Folie kontaktierbar ist. Dieser Verbund 26 wird von den Laminatschichten 22, 23 umschlossen.

In Figur 6 ist eine weitere alternative Ausführungsform eines laminierten Verbundes 26 dargestellt. Die Transpondereinheit 21 ist auf einer Antennenträgerfolie 46 aufgebracht. Auf der Unterseite ist bspw. eine Overlay-Folie 49 vorgesehen, welche ggf. das Druckbild auf der Antennenträgerfolie 46 schützen kann und insgesamt zur Festigkeit des Verbundes 26 beiträgt. Diese Overlay-Folie 49 kann auch anstelle einer Laminatschicht 22 oder 23 vorgesehen sein oder entfallen, so dass die Folie 46 die Funktionen der Overlay-Folie übernimmt. Auf der gegenüberliegenden Seite ist eine Deckfolien 47 mit vorzugsweise einer Aussparung 45 vorgesehen, welche durch eine weitere Deckfolie 48 oder einer Overlay-Folie 49 geschützt ist. Der Laminatschichtenaufbau kann unterschiedliche Anzahlen von übereinanderliegenden Folien aufweisen.

In Figur 7 ist eine weitere schematische Draufsicht auf einen laminierten Verbund 26 dargestellt. Diese Ausgestaltung weicht von Figur 4 insoweit ab, dass die Antennen 38 im äußeren Randbereich der Personalisierseite 16 vorgesehen sind. Bei maximaler Windungszahl kann ein Maximum an Kommunikationsweite erzielt werden bzw. bei vorgegebener Kommunikationsweite ein Minimum an Windungen erforderlich sein.

In Figur 8 ist eine weitere alternative Ausführungsform einer Laminatschichtumhüllung 25 zu den Figuren 4 und 5 dargestellt. Diese Ausführungsform umfasst eine Transpondereinheit 21 mit einer modulartig kleinen Ausführungsvariante der Antenne 38 und eines Chipmoduls 39. Bei derart kleinen Antennengeometrien kann die Antenne 38 direkt am Chipmodul 39 beispielsweise mittels TAB-Technoiogie ausgebildet werden. Bei dieser Ausführungsform kann bspw. die Personalisierseite 16 eine Aussparung aufweisen, in welche die modulartig kleine Ausführungsvariante eingesetzt ist. Des Weiteren kann auf der Vorder- und/oder Rückseite der Personalisierseite 16 eine Deckschicht und/oder Overlay-Schicht vorgesehen sein, welche im Bereich der Transpondereinheit 21 gedünnt oder gelocht ausgeführt ist.

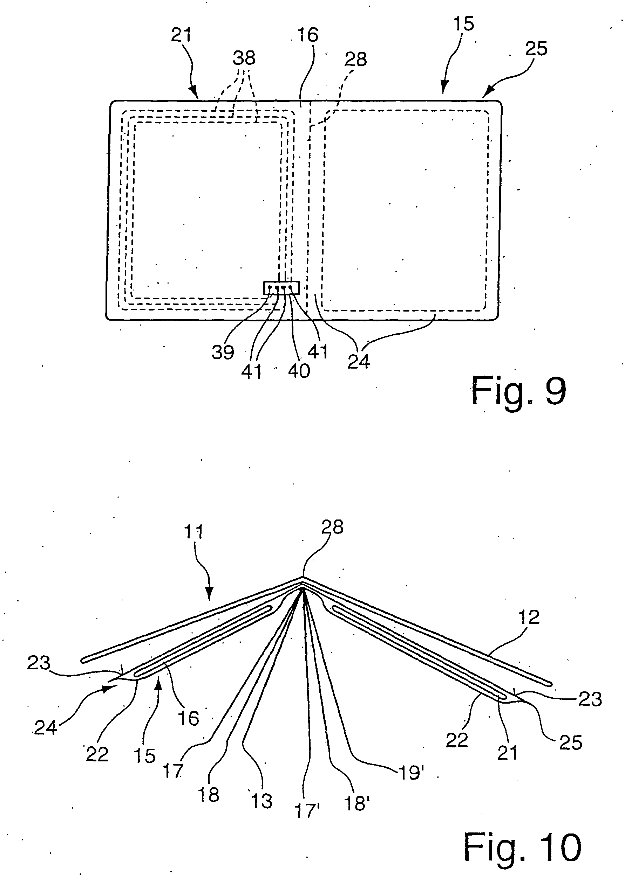

In Figur 9 ist eine weitere alternative Ausgestaltung einer Laminatschichtumhüllung 25 dargestellt. Diese ist als Doppelseite ausgebildet, wobei beispielsweise auf einer linken Seite die Transpondereinheit 21 durch die Laminatschichten 22, 23 geschützt ist und auf der rechten Seite eine Personalisierseite 16 von Laminatschichten 22, 23 umgeben ist. Im Falzbereich ist vorzugsweise eine Perforation oder eine Rillung, die mechanisch oder thermisch eingebracht wird, vorgesehen, um eine Naht 28 beim Herstellen des Wertdokumentes 11 in vereinfachter Form anzubringen. Diese Ausgestaltung ermöglicht eine getrennte Anordnung von zumindest einem Sicherheitsinlett 15 und zumindest einer Transpondereinheit 21 in einer gemeinsamen Laminatschichtumhüllung 25.

In Figur 10 ist die Laminatschichtumhüllung 25 gemäß Figur 9 in einem Wertdokument 11 vorgesehen, welches in einer aufgeklappten Seitenansicht dargestellt ist. Zusätzlich zur Doppelseite können weitere Innenseiten 17, 18 und 19 über die Naht 28 zur Laminatschichtumhüllung 25 vorgesehen sein. Des Weiteren kann vorgesehen sein, dass die Antennenträgerfolie 46 sich über die gesamte Doppelseite erstreckt, wobei der Falzbereich derart ausgebildet ist, dass trotz Biegung eine sichere Durchkontaktierung gegeben ist.

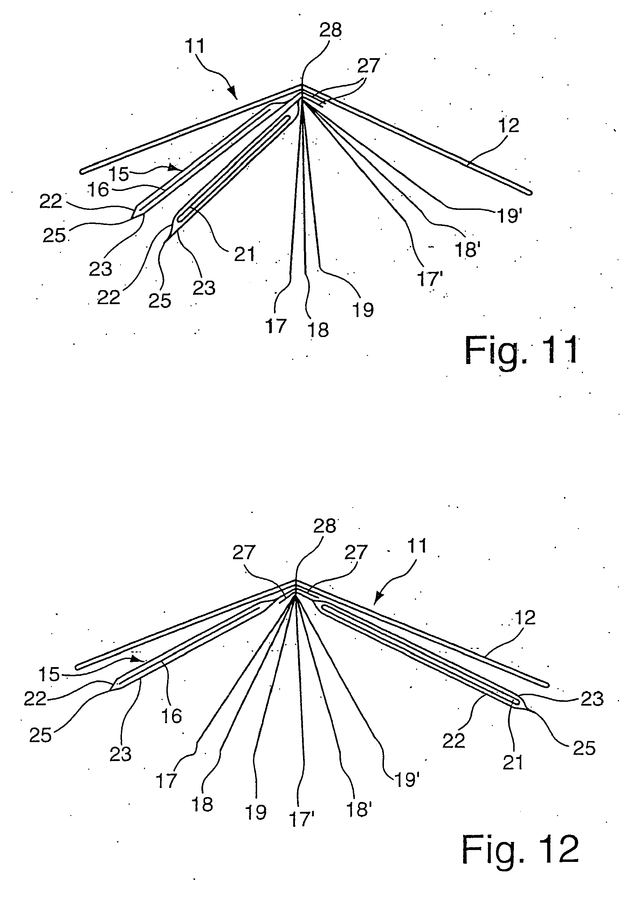

In Figur 11 ist eine alternative Ausführungsform zu Figur 10 dargestellt. Anstelle einer Ausgestaltung eines laminierten Verbundes 26 werden bspw. zwei Laminatschichtumhüllungen 25 mit Überstand 27 in ein Wertdokument 11 eingenäht, wobei eine erste Laminatschichtumhüllung 25 eine Personalisierseite 16 vollständig umschließt und die zumindest eine weitere Laminatschichtumhüllung 25 die Transpondereinheit 21 umfasst. Dadurch ist die Vorder- und Rückseite der Personalisierseite 16 vollständig zugänglich. Diese Ausgestaltung ermöglicht, dass beispielsweise eine Laminatschichtumhüllung 25 mit einer Personalisierseite 16 oder einer Innenseite 17 als auch eine Laminatschichtumhüllung 25 mit einer Transpondereinheit 21 separat hergestellt werden können, um diese bei der Herstellung des Wertdokumentes 11 zusammenzufügen und durch die Speicherung von Personalisierdaten in der Transpondereinheit 21 mit einer erhöhten Fälschungssicherheit zu versehen.

Die in Figur 12 dargestellte Ausführungsform des Wertdokumentes 11 weicht von der in Figur 11 dargestellten Ausführungsform dahingehend ab, dass die die Personalisierseite 16 und/oder eine Innenseite 17, 18, 19 umfassende Laminatschichtumhüllung 25 der die zumindest eine Transpondereinheit 21 umfassenden Laminatschichtumhüllung 25 gegenüberliegend angeordnet ist.

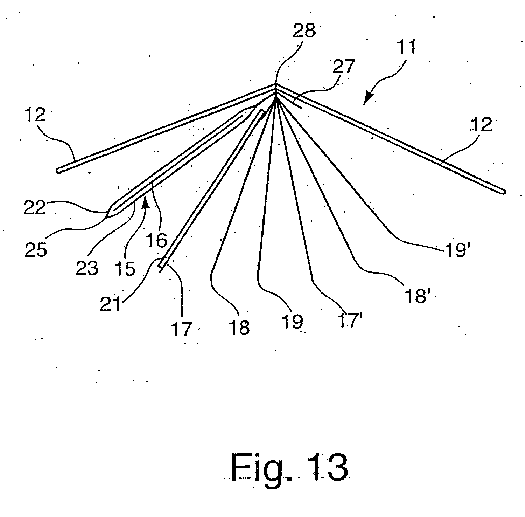

In Figur 13 ist eine weitere alternative Ausführungsform eines Wertdokumentes 11 in der Seitenansicht im aufgeklappten Zustand dargestellt. Die Transpondereinheit 21 ist in Form eines Aufklebers auf eine Innenseite 17, 18 oder 19 aufgebracht. Dieser Aufkleber ist bspw. als Visum, als Verlängerung von Pässen ohne Transpondereinheit, Transpondereinheit für Sparbücher und ähnliche Wertdokumente vorgesehen. Diese Ausgestaltung weist den Vorteil auf, dass die Transpondereinheit 21 entsprechend Figur 6 auf der Innenseite 17, 18 oder 19 nachträglich aufgebracht wird und durch die Programmierung und die Speicherung von biometrischen Merkmalen und weiteren personenspezifischen Merkmalen ein zusätzliche Erhöhung der Fälschungssicherheit erzielt wird. Ebenso kann beispielsweise nach Aufbringen des Aufklebers oder des Visums eine Laserung erfolgen, so dass diese mit der Transpondereinheit 21 versehene Seite 17, 18 oder 19 ebenfalls personalisiert ist. Die Befestigung kann mittels Kaltkleben oder Schmelzkleben erfolgen oder es können reaktive und teilreaktive Klebesysteme verwendet werden.

Die auf die Innenseite aufgebrachte Transpondereinheit 21 kann gemeinsam mit der Innenseite am Ende des Herstellungsprozesses beschnitten bzw. bestanzt werden. Bei dieser Ausführungsform wird die Transpondereinheit 21 kurz vor der Naht 28 bzw. dem Buchrücken beendet, so dass an allen drei anderen Seiten ein voiifiächiger Verbund mit der Innenseite 17, 18 oder 19 gegeben ist und erst am Ende des Herstellungsprozesses eine Berandung durchgeführt wird.

Beim Einsatz einer Transpondereinheit 21, welche in einer Laminatschichtumhüllung 25 oder in einer Laminattasche, welche aus zumindest zwei Laminatschichten 22, 23 besteht, umhüllt ist, kann vorteilhafterweise in dem Wertdokument 11 ein Abschirmelement vorgesehen sein. Unter einem Abschirmelement wird ein Element verstanden, das im geschlossenen Zustand des Wertdokumentes 11 eine drahtlose Kommunikation mit der Transpondereinheit 21 verhindert, jedoch im geöffneten Zustand eine Kommunikation ermöglicht. Insbesondere werden als Abschirmelemente elektronisch leitende Elemente, wie drucktechnisch elektrisch leitende Pasten oder einlaminierte dünne Folien aus Aluminium, Kupfer, Stahl oder einem Drahtgewebe in einer Buchdecke und/oder zu der Transpondereinheit 21 benachbarten Sicherheitsinlett, vorgesehen. Grundsätzlich muss das Abschirmelement nicht vollflächig ausgeführt sein, sondern kann auch strichartig, rasterförmig oder dergleichen ausgeführt sein, so dass eine Störung der RF-Strahlung erfolgt. Das Abschirmelement ist besonders nahe zur Transpondereinheit 21 angeordnet, wodurch eine besonders gute Abschirmung durch Kurzschlüsse der elektromagnetischen Welle bewirkt wird.

Die Herstellung der Laminatschichtumhüllung 25, welche zumindest ein Sicherheitsinlett 15 und eine Transpondereinheit 21 umfasst, kann folgendermaßen vorgesehen sein:

Zunächst wird das Sicherheitsinlett 15 erzeugt, welches beispielsweise aus Papier, Kunststoff oder dergleichen besteht. Dieses Sicherheitsinlett wird mit Sicherheitsmerkmalen wie einem Sicherheitsdruck, optischen Elementen, fotografischen Elementen, drucktechnisch hergestellten Sicherheitsmerkmalen als auch lasertechnisch angebrachten Merkmalen hergestellt.

Die Transpondereinheit 21 besteht aus einem Chipmodul 39 und einer Antenne 38. In Abhängigkeit des Aufbaus der Laminatschichtumhüllung 25 kann ein Chipmodul 39 mit einer externen Antenne 38 als auch ein Chipmodul 39 mit einer integrierten Antenne 38 vorgesehen sein. Bei einem ungehausten Chipmodul 39 wird bevorzugt eine sogenannte Flip-Chip-Kontaktierung gewählt, bei der das ungehauste Chipmodul 39 direkt auf die Antennenanschlüsse aufgebracht wird. Das Antennensubstrat kann wahlweise ausgeführt und hergestellt werden. Das Chipmodul 39 wird bevorzugt mittels einer entsprechenden Vergussmasse geschützt. Dieses fertige Element kann direkt auf ein Sicherheitsinlett 15, sofern erforderlich oder gewünscht, mittels Haftvermittler befestigt werden, wobei wahlweise der Chip in eine Ausstanzung 45 im Sicherheitsinlett 15 oder einer Deckfolie 47, 48 angebracht wird, so dass die Erhöhung durch den Chip beziehungsweise die Verbundmasse in dieser Ausstanzung 45 angeordnet ist oder es kann das Antennensubstrat mit einem zusätzliche Laminat derart verstärkt werden, dass der Chip mit der Vergussmasse weitgehend bündig oder bevorzugt bündig einlaminiert ist und derart bündig an der Personalisierseite montiert wird.

Die Transpondereinheit 21 kann ebenso durch ein Chipmodul 39 realisiert werden, bei welchem die ICs auf sogenannte Interposer- beziehungsweise Kontaktelementen 40 befestigt werden, deren zwei Kontaktelemente dann mit den Kontaktenden der Antennenspule 38 elektrisch leitend verbunden werden. Diese IC-Montage kann ebenfalls mittels der Flip-Chip-Technik als auch mittels konventioneller Bond-Technik erfolgen.

Bei der Ausgestaltung einer Transpondereinheit 21 mittels eines Chipmoduls 39 mit integrierter Antenne 38 kann bei der Verwendung des sogenannten TAB-Prozesses (Tape Automatic Bonding) ein besonders effizienter und kostengünstiger Prozess durchgeführt werden. Im Fall der Integration der Antenne 38 in Form einer Spule oder eines Dipols oder eines gefalteten Dipols kann diese in Feinleiterätztechnik auf einer dünnen FR-4-Schicht oder einem Polyamidsubstrat beziehungsweise auch grundsätzlich auf einem Polyester oder Polycarbonat- oder Polyamid- oder PVC- oder ABS-Substrat kostengünstig hergestellt werden.

Das Transpondereinheit 21 kann in einer bevorzugten Ausführungsform mit dem Sicherheitsinlett 15 verbunden werden. In einer alternativen Ausführungsform kann die Transpondereinheit 21 benachbart zu einem Sicherheitsinlett 15 angeordnet sein, wie beispielsweise durch Ausgestaltung einer Doppelseite, wobei die jeweils getrennte Anordnung auch auf einer Seite vorgesehen sein kann.

Das Sicherheitsinlett 15 und die Transpondereinheit 21 sind bevorzugt kleiner als das Endformat eines Buchblockes ausgebildet. Auf zumindest einer Seite der Transpondereinheit 21 und des zumindest einen Sicherheitsinletts 15 wird eine Laminatschicht 22, 23 aufgebracht, wodurch das zumindest eine Sicherheitsinlett 15 und die zumindest eine Transpondereinheit 21 geschlossen wird. Im Anschluss daran oder gleichzeitig wird ein umlaufender Rand 24 gebildet, welcher durch Laminierung unter Druck und Temperatur zum Beispiel in einem Rollenlaminator oder einer Laminierpresse hergestellt wird. In einem weiteren Arbeitsschritt wird die laminierte Umhüllung 25 auf ein Endformat geschnitten oder gestanzt.

Die laminierte Umhüllung 25 wird in ein Buchblock 20 oder in ein Wertdokument 11 eingebracht und vorzugsweise eingenäht. Nach dem Einbringen können weitere Personalisiermerkmale durch eine Lochrasterung oder Laserung in die laminierte Umhüllung 25 eingebracht werden.

Die vorbeschriebenen Merkmale sind beliebig miteinander kombinierbar und jeweils für sich erfinderisch.

## Patentansprüche

1. Verfahren zur Herstellung eines buchartigen Wertdokumentes mit zumindest einem Sicherheitsinlett (15) und zumindest einer Transpondereinheit (21),
- bei dem wenigstens auf einer Seite des zumindest einen Sicherheitsinletts (15) und auf wenigstens einer Seite der zumindest einen Transpondereinheit (21) wenigstens eine Laminatschicht (22, 23) aufgebracht wird, **dadurch gekennzeichnet,**
- **dass** das zumindest eine Sicherheitsiniett (15) und die zumindest eine Transpondereinheit (21) von den Laminatschichten (22, 23) vollständig umschlossen werden und ein durch die Laminatschichten (22, 23) umlaufender geschlossener Rand (24) ausgebildet wird,
- so dass eine Laminatschichtumhüllung (25) gebildet wird, und
- **dass** die zumindest eine Transpondereinheit (21) nach dem Herstellen der Laminatschichtumhüllung (25) personalisiert wird.

2. Verfahren nach Anspruch 1, **dadurch gekennzeichnet, dass** die Laminatschichtumhüllung (25) in einen Buchblock (20) eingebracht wird.

3. Verfahren nach Anspruch 1 oder 2, **dadurch gekennzeichnet, dass** der Rand (24) der Laminatschichten (22, 23) nach dem vollständigen Umschließen des zumindest einen Sicherheitsinlett (15) und der zumindest einen Transpondereinheit (21) auf ein Endformat gestanzt, geschnitten oder durch andere Trennverfahren, beispielsweise Laserschneiden, konfektioniert wird.

4. Verfahren nach einem der Ansprüche 1 bis 3, **dadurch gekennzeichnet, dass** das zumindest eine Sicherheitsinlett (15) und die zumindest eine Transpondereinheit (21) in einer Schicht kombiniert oder durch mehrere Schichten ein Verbund (26) gebildet werden.

5. Verfahren nach einem der Ansprüche 1 bis 3, **dadurch gekennzeichnet, dass** auf das zumindest eine Sicherheitsinlett (15) zumindest eine Transpondereinheit (21) aufgebracht wird und ein Verbund (26) gebildet wird, der durch die Laminatschichten (22, 23) umschlossen wird.

6. Verfahren nach einem der vorhergehenden Ansprüche, **dadurch gekennzeichnet, dass** an zumindest einer Längsseite der Laminatschichtumhüllung (25) ein Überstand (27) erzeugt wird und dass die Laminatschichtumhüllung (25) im Bereich des Überstandes (27) in einen Buchblock (20) eingenäht wird.

7. Verfahren nach einem der Ansprüche 1 bis 5, **dadurch gekennzeichnet, dass** durch die Laminatschichtumhüllung (25) eine Doppelseite für einen Buchblock (20) gebildet wird und auf einer Seite der Doppelseite zumindest ein Sicherheitsinlett (15) eingebracht wird und auf der benachbarten Seite der Doppelseite zumindest ei-ne Transpondereinheit (21) eingebracht wird.

8. Verfahren nach Anspruch 7, **dadurch gekennzeichnet, dass** im Falzbereich der Doppelseite ein Steg, eine Rillung oder eine Perforation ausgebildet wird und die Doppelseite im Bereich des Steges, der Rillung oder der Perforation in einen Buchblock (20) eingenäht wird.

9. Verfahren nach einem der vorhergehenden Ansprüche, **dadurch gekennzeichnet, dass** die Lamlnatschichten (22, 23) zumindest unter Druck oder Temperatur miteinander verklebt, gepresst, verschweißt oder verbunden werden.

10. Verfahren nach einem der vorhergehenden Ansprüche, **dadurch gekennzeichnet, dass** die zumindest eine Transpondereinheit (21) mit einem ein Hash-Wert auf der Basis der ICAO-Zeile und/oder von Personalisierdaten bildenden Algorithmus personalisiert wird.

11. Verfahren nach einem der vorhergehenden Ansprüche, **dadurch gekennzeichnet, dass** nach der Herstellung einer Laminatschichtumhüllung (25) zumindest ein Sicherheitsmerkmal, beispielsweise eine Laserung oder Lochstanzung, in die Laminatschichtumhüllung (25) eingebracht wird.

12. Verfahren nach einem der vorhergehenden Ansprüche, **dadurch gekennzeichnet, dass** während oder nach der Herstellung eines Wertdokumentes ein permanent in der zumindest einen Transpondereinheit (21) abgelegter Wert als Sicherheitsmerkmal eingebracht wird.

13. Verfahren nach einem der vorhergehenden Ansprüche, **dadurch gekennzeichnet, dass** die Laminatschichten (22, 23) aus Kunststofffolien, insbesondere aus PVC, ABS, PET-G, PET, PE, PP, PA, Teslin, PC oder aus sandwichartigen Folienkombinationen, insbesondere den vorgenannten Materialien, hergestellt wird.

14. Verfahren nach einem der vorhergehenden Ansprüche, **dadurch gekennzeichnet, dass** die zumindest eine Transpondereinheit (21) ein Chipmodul (39) mit einer integrierten Antenne (38) umfasst, welches durch einen Tape-Automatic-Bonding-Prozess (TAB) auf zumindest ein Sicherheitsinlett (15) oder eine Laminatschicht (22, 23) aufgebracht wird.

15. Verfahren nach einem der Ansprüche 1 bis 13, **dadurch gekennzeichnet, dass** die zumindest eine Transpondereinheit (21) ein Chipmodul (39) umfasst, bei dem IC's auf Kontaktelementen mittels einer Flip-Chip-Technik oder mittels konventioneller Bond-Technik befestigt werden, wobei die Kontaktelemente mit Kontaktenden der Antenne (38) elektrisch leitend verbunden werden.

16. Verfahren nach einem der Ansprüche 1 bis 13, **dadurch gekennzeichnet, dass** ein ungehaustes IC (39) mittels einer Flip-Chip-Kontaktierung direkt auf Antennenanschlüsse einer in einer Laminatschicht (22, 23) ausgebildeten Antenne (38) zur Bildung zumindest einer Transpondereinheit (21) kontaktiert wird.

17. Verfahren nach Anspruch 15, **dadurch gekennzeichnet, dass** die zumindest eine Transpondereinheit (21) ein Chipmodul (39) für die Kontaktierung einer externen Spule oder Antenne (38) umfasst, wobei die Spule oder Antenne (38) durch Siebdruck mittels polymeren und leitfähigen Pasten, durch lackisolierte metallische Drähte, insbesondere mittels Ultraschall-Sonodroden-Verlegetechnik, durch ein Einlegen oder Laminieren einer Luftspule in entsprechende Aussparungen, durch flexible Leiterplatten in subtraktiver Technik, durch Ätztechnik in metallische Flächen oder durch Ink-Jet-Technik mit einem leitfähigen Medium, insbesondere Tinte, hergestellt werden.

18. Verfahren nach einem der vorhergehenden Ansprüche 14 bis 17, **dadurch gekennzeichnet, dass** das Chipmodul (39) mittels einer Vergussmasse zwischen den zumindest zwei Laminatschichten (22, 23) befestigt wird.

19. Verfahren nach einem der Ansprüche 1 bis 13, **dadurch gekennzeichnet, dass** ein Chipmodul (39) mit integrierter Antenne (38) direkt auf einem Sicherheitsinlett (15) aufgebracht wird und die Dicke der zumindest einen Laminatschicht (22, 23) im Bereich des Chipmoduls (39) örtlich verdünnt oder ausgestanzt wird.

20. Verfahren nach einem der vorhergehenden Ansprüche, **dadurch gekennzeichnet, dass** die zumindest eine Laminatschicht (22, 23) als transparente Folie zur Herstellung der Laminatschichtumhüllung (25) verarbeitet wird.

21. Buchartiges Wertdokument hergestellt nach einem der vorhergehenden Ansprüche, mit zumindest einem Sicherheitsinlett (15) und zumindest einer Transpondereinheit (21), wobei auf einer Seite des zumindest einen Sicherheitsinletts (15) und auf wenigstens einer Seite der zumindest einen Transpondereinheit (21) wenigstens eine Laminatschicht (22, 23) vorgesehen ist, **dadurch gekennzeichnet, dass** zumindest ein Sicherheitsinlett (15) und zumindest eine Transpondereinheit (21) vollständig durch zumindest eine Laminatschicht (22, 23) umgeben und eine vollständig umgebende Laminatschichtumhüllung (25) ausgebildet ist und anschließend die Transpondereinheit (21) mit Personalisierdaten programmierbar ist.

22. Wertdokument nach Anspruch 21, **dadurch gekennzeichnet, dass** das zumindest eine Sicherheitsinlett (15) und die zumindest eine Transpondereinheit (21) jeweils kleiner oder gleich als ein Endformat einer Seite eines Buchblockes (20) ausgebildet ist.

23. Wertdokument nach Anspruch 21 oder 22, **dadurch gekennzeichnet, dass** das zumindest eine Sicherheitsinlett (15) als eine Innenseite oder eine Personalisierseite für einen Buchblock (20) oder als Vorsatz (14) ausgebildet ist.

24. Buchartiges Wertdokument nach einem der Ansprüche 21 bis 23, **dadurch gekennzeichnet, dass** die zumindest eine Laminatschicht (22, 23) als Deckfolie oder als Overlayfolie ausgebildet ist.

## Claims

1. Method for the production of a book-type security document with at least one security cambric (15) and at least one transponder unit (21),
- with at least one laminated layer (22, 23) which is applied at least on one side of the at least one security cambric (15) and on at least one side of the at least one transponder unit (21),
**characterized in that**
- the at least one security cambric (15) and the at least one transponder unit (21) are fully encompassed by the laminated layers (22, 23) and that a circumferential, closed edge (24) is provided by the laminated layers (22, 23),
- so that a laminated layer sheath (25) is formed, and
- that the at least one transponder unit (21) is personalized after the production of the laminated layer sheath (25).

2. Method according to claim 1, **characterized in that** the laminated layer sheath (25) is introduced into a book block (20).

3. Method according to claim 1 or 2, **characterized in that** the edge (24) of the laminated layers (22, 23) - after complete encompassing of the at least one security cambric (15) and the at least one transponder unit (21) - will be stamped to an end format, cut, or cut to size by other separating methods, for example laser cutting.

4. Method according to any one of the claims 1 to 3, **characterized in that** the at least one security cambric (15) and the at least one transponder unit (21) are combined in one layer or that a composite (26) is formed by several layers.

5. Method according to any one of the claims 1 to 3, **characterized in that** at least one transponder unit (21) is applied onto the at least one security cambric (15), and a composite (26) is formed which is encompassed by the laminated layers (22, 23).

6. Method according to any one of the preceding claims, **characterized in that** a projection (27) is produced on at least one longitudinal side of the laminated layer sheath (25), and that the laminated layer sheath (25) is sewn into a book block (20) in the area of the projection (27).

7. Method according to any one of the claims 1 to 5, **characterized in that** a double page for a book block (20) is formed by the laminated layer sheath (25) and on one side of the double page, at least one security cambric (15) is introduced and on the adjacent side of the double page, at least one transponder unit (21) is introduced.

8. Method according to claim 7, **characterized in that** - in the folding area of the double page - a stay, a groove or a perforation is formed, and the double page is sewn into a book block (20) in the area of the stay, the groove or the perforation.

9. Method according to any one of the preceding claims, **characterized in that** the laminated layers (22, 23) are glued, pressed, welded or combined with each other at least under pressure or temperature.

10. Method according to any one of the preceding claims, **characterized in that** the at least one transponder unit (21) is personalized with an algorithm forming a hash value on the basis of the ICAO line and/or of personalization data.

11. Method according to any one of the preceding claims, **characterized in that** - after the production of a laminated layer sheath (25) - at least one security characteristic is provided in the laminated layer sheath (25), for example lasering or hole punching.

12. Method according to any one of the preceding claims, **characterized in that** - during or after the production of a security document - a value permanently deposited in the at least one transponder unit (21) is introduced as a security characteristic.

13. Method according to any one of the preceding claims, **characterized in that** the laminated layers (22, 23) are produced of plastic films, especially of PVC, ABS, PET-G, PET, PE, PP, PA, teslin, PC, or of sandwich-type film combinations especially of the aforementioned materials.

14. Method according to any one of the preceding claims, **characterized in that** the at least one transponder unit (21) comprises a chip module (39) with an integrated antenna (38) which is applied - by means of a tape automatic bonding process (TAB) - onto at least one security cambric (15) or one laminated layer (22, 23).

15. Method according to any one of the claims 1 to 13, **characterized in that** the at least one transponder unit (21) comprises a chip module (39) wherein ICs are fastened on contact elements by means of flip chip technology or by means of the conventional bonding technology, with the contact elements being electrically conductively connected with contact ends of the antenna (38).

16. Method according to any one of the claims 1 to 13, **characterized in that** an un-housed IC (39) is contacted by means of flip chip contacting directly on antenna connections of an antenna (38) designed in a laminated layer (22, 23), for the formation of at least one transponder unit (21).

17. Method according to claim 15, **characterized in that** the at least one transponder unit (21) comprises a chip module (39) for contacting an external coil or antenna (38), with the coil or antenna (38) being produced through screen printing by means of polymer and conductive pastes, through enamel-insulated metallic wires, especially by means of ultrasonic sonotrode laying technique, through insertion or lamination of an air coil into corresponding recesses, through flexible printed circuit boards in subtractive technique, through an etching technique in metallic surfaces or through an inkjet technique with a conductive medium, especially ink.

18. Method according to any one of the preceding claims 14 to 17, **characterized in that** the chip module (39) is fastened by means of a casting compound between the at least two laminated layers (22, 23).

19. Method according to any one of the claims 1 to 13, **characterized in that** a chip module (39) with integrated antenna (38) is directly applied on a security cambric (15) and the thickness of the at least one laminated layer (22, 23) is locally thinned or punched out in the area of the chip module (39).

20. Method according to any one of the preceding claims, **characterized in that** the at least one laminated layer (22, 23) is processed as a transparent film for the production of the laminated layer sheath (25).

21. Book-type security document, manufactured according to any one of the preceding claims, with at least one security cambric (15) and at least one transponder unit (21) having at least one laminated layer (22, 23) on at least on side of the at least one security cambric (51) and on at least one side of the at least one transponder unit (21), **characterized in that** at least one security cambric (15) and at least one transponder unit (21) are fully encompassed by at least one laminated layer (22, 23), and a fully encompassing laminated layer sheath (25) is provided and subsequently the transponder unit (21) is personalized with personal data.

22. Security document according to claim 21, **characterized in that** the at least one security cambric (15) and the at least one transponder unit (21) are each designed smaller than or equal to an end format of a page of a book block (20).

23. Security document according to claim 21 or 22, **characterized in that** the at least one security cambric (15) is designed as an inside page or a personalization page for a book block (20) or as an end page (14).

24. Book-type security document according to any one of the claims 21 to 23, **characterized in that** the at least one laminated layer (22, 23) is designed as a cover film or as an overlay film.

## Revendications

1. Procédé de fabrication d'un document de valeur de type livre qui présente au moins un insert de sécurité (15) et au moins une unité de transpondeur (21),
- dans lequel au moins une couche stratifiée (22, 23) est appliquée au moins sur un côté du ou des inserts de sécurité (15) et sur au moins un côté de la ou des unités de transpondeur (21),
**caractérisé en ce que**
- le ou les inserts de sécurité (15) et la ou les unités de transpondeur (21) sont complètement englobées dans les couches stratifiées (22, 23) et un bord périphérique fermé (24) est formé par les couches stratifiées (22, 23),
- de manière à former une enveloppe (25) en couche stratifiée et
- **en ce que** la ou les unités de transpondeur (21) sont personnalisées après la réalisation de l'enveloppe (25) en couche stratifiée.

2. Procédé selon la revendication 1, **caractérisé en ce que** l'enveloppe (25) en couche stratifiée est placée dans un corps d'ouvrage (20).

3. Procédé selon les revendications 1 ou 2, **caractérisé en ce qu'**après avoir englobé complètement le ou les inserts de sécurité (15) et la ou les unités de transpondeur (21), les bords (24) des couches stratifiées (22, 23) sont estampés au format final, découpées ou confectionnées par d'autres procédés de séparation, par exemple la découpe au laser.

4. Procédé selon l'une des revendications 1 à 3, **caractérisé en ce que** le ou les inserts de sécurité (15) et la ou les unités de transpondeur (21) sont combinés dans une couche ou **en ce qu'**un composite (26) est formé de plusieurs couches.

5. Procédé selon l'une des revendications 1 à 3, **caractérisé en ce que** sur le ou les inserts de sécurité (15) est appliquée au moins une unité de transpondeur (21) et **en ce qu'**un composite (26) englobé par les couches stratifiées (22, 23) est formé.

6. Procédé selon l'une des revendications précédentes, **caractérisé en ce qu'**un débord (27) est formé sur au moins un côté longitudinal de l'enveloppe (25) en couche stratifiée et **en ce que** l'enveloppe (25) en couche stratifiée est cousue dans un corps d'ouvrage (20) dans la zone du débord (27).

7. Procédé selon l'une des revendications 1 à 5, **caractérisé en ce que** l'enveloppe (25) en couche stratifiée forme une double page pour un corps d'ouvrage (20), **en ce qu'**au moins un insert de sécurité (15) est appliqué sur un côté de la double page et **en ce qu'**au moins une unité de transpondeur (21) est installée sur le côté voisin de la double page.

8. Procédé selon la revendication 7, **caractérisé en ce que** dans la zone de pliage de la double page est formée une languette, une rainure ou une perforation et **en ce que** la double page est cousue dans un corps d'ouvrage (20) dans la zone de la languette, de la rainure ou de la perforation.

9. Procédé selon l'une des revendications précédentes, **caractérisé en ce que** les couches stratifiées (22, 23) sont collées, comprimées, soudées ou reliées l'une à l'autre au moins sous l'action de la pression ou de la température.

10. Procédé selon l'une des revendications précédentes, **caractérisé en ce que** la ou les unités de transpondeur (21) sont personnalisées à l'aide d'une valeur de Hash à base de la ligne ICAO et/ou d'un algorithme qui forme des données de personnalisation.

11. Procédé selon l'une des revendications précédentes, **caractérisé en ce qu'**après la fabrication d'une enveloppe (25) en couche stratifiée, au moins une caractéristique de sécurité, par exemple une impression au laser ou la perforation de trous, est ménagée dans l'enveloppe (25) en couche stratifiée.

12. Procédé selon l'une des revendications précédentes, **caractérisé en ce que** pendant ou après la fabrication d'un document de valeur, une valeur qui sert de caractéristique de sécurité est installée de manière permanente dans la ou les unités de transpondeur (21).

13. Procédé selon l'une des revendications précédentes, **caractérisé en ce que** les couches stratifiées (22, 23) sont réalisées à partir de films de matière synthétique, en particulier en PVC, ABS, PET-G, PET, PE, PP, PA, Teslin, PC ou en combinaisons en sandwich de films en particulier desdits matériaux.

14. Procédé selon l'une des revendications précédentes, **caractérisé en ce que** la ou les unités de transpondeur (21) comprennent un module de puce (39) à antenne (38) intégrée qui est appliqué par un procédé de liaison automatique par ruban adhésif (TAB) sur au moins un insert de sécurité (15) ou une couche stratifiée (22, 23).

15. Procédé selon l'une des revendications 1 à 13, **caractérisé en ce que** la ou les unités de transpondeur (21) comprennent un module de puce (39) dans lequel des circuits intégrés IC sont fixés sur des éléments de contact au moyen d'une technique dite "flip-chip" ou au moyen d'une technique classique de liaison, les éléments de contact étant reliés de manière électriquement conductrice à des bornes de contact de l'antenne (38).

16. Procédé selon l'une des revendications 1 à 13, **caractérisé en ce que** pour former au moins une unité de transpondeur (21), un IC nu (39) est mis directement en contact par la technique "flip-chip" sur les bornes d'antenne d'une antenne (38) formée dans une couche stratifiée (22, 23).

17. Procédé selon la revendication 15, **caractérisé en ce que** la ou les unités de transpondeur (21) comprennent un module de puce (39) destiné à assurer le contact avec une bobine externe ou une antenne (38), la bobine ou l'antenne (38) étant formées par sérigraphie à l'aide de pâte polymère et conductrice, par des fils métalliques isolés par vernis, en particulier par la technique de pose à ultrasons dite "Sonodrode", par insertion ou stratification d'une bobine sans fer dans des découpes correspondantes, par des cartes de circuit souples formées par technique soustractive, par une technique de gravure de surfaces métalliques ou par une technique d'impression à jet d'encre à l'aide d'un fluide conducteur, en particulier une encre.

18. Procédé selon l'une des revendications 14 à 17 qui précèdent, **caractérisé en ce que** le module de puce (39) est fixé au moyen d'une pâte de scellement entre les deux ou plusieurs couches stratifiées (22, 23).

19. Procédé selon l'une des revendications 1 à 13, **caractérisé en ce qu'**un module de puce (39) à antenne (38) intégrée est appliqué directement sur un insert de sécurité (15), l'épaisseur de la ou des couches stratifiées (22, 23) étant localement diminuée ou découpée dans la zone du module de puce (39).

20. Procédé selon l'une des revendications précédentes, **caractérisé en ce que** la ou les couches stratifiées (22, 23) sont traitées sous la forme d'une feuille transparente pour fabriquer l'enveloppe (25) en couche stratifiée.

21. Document de valeur de type livre fabriqué selon l'une des revendications précédentes, qui présente au moins un insert de sécurité (15) et au moins une unité de transpondeur (21), au moins une couche stratifiée (22, 23) étant prévue sur un côté du ou des inserts de sécurité (15) et sur au moins un côté de la ou des unités de transpondeur (21), **caractérisé en ce qu'**au moins un insert de sécurité (15) et au moins une unité de transpondeur (21) sont englobés complètement par au moins une couche stratifiée (22, 23) et **en ce qu'**une enveloppe (25) en couche stratifiée les entoure complètement, l'unité de transpondeur (21) pouvant ensuite être programmée avec des données de personnalisation.

22. Document de valeur selon la revendication 21, **caractérisé en ce que** le ou les inserts de sécurité (15) et la ou les unités de transpondeur (21) sont tous configurés à une taille inférieure ou égale au format final d'une page d'un corps d'ouvrage (20).

23. Document de valeur selon les revendications 21 ou 22, **caractérisé en ce que** le ou les inserts de sécurité (15) sont configurés comme page intérieure ou page personnalisée d'un corps de livre (20) ou comme couverture (14).

24. Document de valeur de type livre selon l'une des revendications 21 à 23, **caractérisé en ce que** la ou les couches stratifiées (22, 23) sont configurées comme feuilles de recouvrement ou comme feuilles de finition.
